# EUROPEAN PATENT APPLICATION

(11) **EP 1 315 330 A1**
(43) Date of publication of application: **28.05.2003**
(21) Application number: 01650139.7
(22) Date of filing: 21.11.2001
(51) Int. Cl.: H04L 12/24, H04L 29/08, H04Q 7/32

(54) **A mobile device provisioning system**

(71) Applicant: Markport Limited, Dublin 1 (IE)
(72) Inventor: O'Connor, Padraig, Grenagh, County Cork (IE); Somers, Fergus, Cork City, County Cork (IE)
(74) Representative: Weldon, Michael James

(57) **Abstract**

A provisioning document is transmitted to a mobile device. Its is generated by storing a provisioning document template (PDT) having provisioning parameters. A relevant PDT is selected and is converted with automatic enforcement of associated rules. Some parameter values may be interactively edited. The PDT has a mark-up language structure.

## Description

### Introduction

The invention relates to provisioning of devices in a network for service access.

The following defines terms used in this specification.
- Network: a commercial system of interconnected machines offering services to subscribers via their devices, e.g. the GSM mobile network. A network may be wired or wireless.
- Operator: the person or persons maintaining the network and who offers services to subscribers.
- Subscriber: an individual who pays to receive services via their network device, e.g., pre-pay mobile phone customer.
- Services: facilities enabled by access to the network, e.g., voice calls, notifications, e-mail, internet access, SMS.
- Device: equipment capable of communicating with the network and allowing the subscriber to experience network services, e.g., mobile phone, personal digital assistant, personal computer.
- Provisioning: the task of configuring a subscriber's device to allow it access services on the network, e.g., setting a user name and password on the device to allow it download the subscriber's e-mail from the network.
- Customer Service Centre (CSC): a part of the operator's organisation interacting directly with subscribers to provision services.
- Extensible Mark-up Language (XML): platform independent language for describing data, defined by W3C.
- Document Type Definition (DTD): a formal description in XML Declaration Syntax of a particular type of document.

The invention is relevant to a number of provisioning technologies, for example, the CDMA Developers Group (CDG) IP-based Over The Air (IOTA) provisioning standards, the WAP Forum provisioning standards, and the emerging SyncML standard. The following are a number of common problems which the invention addresses.
- Network operators often have many types of devices in their network. It is common for these devices to support a provisioning standard to different degrees. It is also not uncommon for these devices to support non-standard extensions for vendor and device-specific features. Vendors may supply equipment to provision their own devices but it is difficult for the operator to find a single tool that can support all of these various devices without having to resort to development of bespoke software.
- With many device types to be supported, a network operator needs considerable expertise to determine the parameters necessary and acceptable to every device. Operators rarely have the resources to offer this expertise directly to every subscriber.
- Existing provisioning systems are typically statically constructed, i.e., the system supports a particular version of a provisioning standard. The system may be backward compatible (supporting previous versions of the standard) but few are forward compatible or extensible. If the operator adds (or allows) a device type to their network requiring the provision of additional parameters, then this requires a new version of the system along with the expense of testing and deploying it.

The following discusses the WAP Forum standard in order to illustrate in more detail some of the difficulties associated with designing a provisioning system, but the issues raised below are relevant to a system attempting to manage a number of diverse devices under almost any XML-based standard.

The WAP Forum was founded by a number of companies to standardise Internet services on mobile phones. From their site at www.wapforum.org:

*" The WAP Forum is the industry association comprising over 500 members that has developed the de-facto world standard for wireless information and telephony services on digital mobile phones and other wireless terminals*."

The principal goal of the WAP Forum is standardise the technology to allow a mobile phone subscriber browse the internet in much the same way as a PC user browses the internet. A new language called WML, very like HTML, was defined to build web pages more suited to the small screen size of mobile phones, and based on this a significant number of phone manufacturers developed WAP browsers (analogous to Internet Explorer or Netscape HTML browsers) for their mobile phones.

In a parallel with the fixed-line dial-up internet access, mobile phones (in 2G at least) access the internet by making a phone call. The mobile phone dials a Remote Access Server (RAS) in the mobile operator's network, and then sets up a WAP session. When the user starts a session he/she may be asked to authenticate his/herself by supplying a login name and password. In the PC world, the phone number dialled, the username, password and any other connection information is usually supplied to the subscriber on a CD-ROM, which guides them through the process of configuring their equipment. With a mobile device this is not usually possible.

In response to this the WAP Forum have defined a number of standards relating to provisioning of mobile phone WAP browsers. The standards allow an operator send the connection information from a console (or some other server in their network) to the subscriber's handset, which may have an existing configuration or no configuration at all. Once the configuration is accepted, the subscriber can begin to browse the internet, for example in 2G networks this information is sent in the body of one or more SMS messages.

The standards define the form of this configuration data. It defines a number of characteristics, e.g., the ADDRESS *characteristic,* which describes how to dial the RAS server. Each characteristic usually has a number of parameters, e.g., the ADDRESS characteristic includes the CSD_DIALSTRING *parameter,* which gives the phone number to dial in order to reach the RAS server. The provisioning data is defined as an Extensible Mark-up Language (XML) document.

The current WAP standard defines at least ten characteristics, each of which has an average of about six parameters. The standards attempt to cover all reasonable eventualities, and offer more characteristics, and parameters within characteristics, than are necessary for an operator to describe their WAP service. For example, the standards may allow a number of different authentication models to be used, and only the parameters related to an operator's specific authentication model are of interest. The operator therefore must choose a subset of characteristics and parameters from the WAP specification that are of relevance to their network.

Within this subset, many of the characteristics will be fixed values, shared by all subscribers, e.g., browser home page, but some are specific to individual subscribers, e.g., username and password.

In addition, within an operator's network, many different browser types, and versions of browsers, are likely to exist. Each browser is likely to support only a subset of the WAP-defined characteristics. Therefore an operator is bound to consider the type of browser being used by the subscriber before attempting to download a configuration to the subscriber's phone.

Also, as mobile phones become smarter, their capabilities increase. Manufacturers are constantly adding new software to their phones to increase the phone's appeal to the market, e.g., e-mail is now a common facility on internet-enabled phones. E-mail, like internet browsers, requires a configuration to work in a mobile network. To allow such non-WAP configurations to be delivered to phones, manufacturers have defined proprietary extensions to the WAP provisioning mechanism. By adding new characteristics and parameters to the WAP XML document, and making extensions to the browser software, the manufacturer can use the WAP mechanism to deliver configurations to almost any program on the phone. Network operators would clearly like to enable subscribers to take full advantage of the features of their phone, but to do so they must be able to support and manage the individual non-standard characteristics of many phone types.

Generally then, the problem facing the operator, under any standard, is to define the parameters that characterise their network, and then deliver these parameters to many device types This is complicated by the fact that some of these devices support only a subset of the parameters, and/or parameters outside of the relevant standard.

Some facets of this problem are:
- How can a provisioning system embody the parameters that describe an operator's network?
- How can a provisioning system be driven to only send the subset of these parameters supported by a particular device type?
- How can a provisioning system allow fixed, and per-subscriber parameter values be sent to a subscriber's device?
- How can a provisioning system support non-standard parameters for different device types?
- How can a provisioning system provide an interface that allows it to be used by less technical staff in the operator's network?

Thus, the invention is directed towards providing a system to address these problems.

### Statements of Invention

According to the invention, there is provided a mobile device provisioning system comprising means for generating a provisioning document and for directing transmission of said document to a mobile device to provision the device, characterised in that, the system comprises:-
means for storing a set of provisioning document templates (PDTs), each PDT including a set of provisioning parameter values for provisioning a type of device;
means for selecting a PDT applicable to a device to be provisioned; and
means for converting the selected PDT to a provisioning document.

In one embodiment, the system further comprises means for storing master template (MT) documents, each MT including a complete set of possible provisioning parameters, the set being defined by an industry provisioning standard or by proprietary specification from a device vendor, and means for selecting a MT applicable to a device type from which a PDT may be generated.

In another embodiment, the system comprises means for generating the PDTs, said means comprises means for automatically enforcing rules of the industry standard or proprietary specification of the MT.

In a further embodiment, the rules specify which parameters must be present in the final provisioning document and there are occurrence rules for those parameters as defined by the operator, and which define how many times a parameter or sub-parameter can or must occur in a provisioning document.

In one embodiment, a PDT specifies fixed values for some parameters and variable values for other parameters, and comprises means for allowing customer care editing of the variable values.

In another embodiment, the system further comprises means for assisting customer care in constructing the provisioning document by generating visual prompts, default values, and restrictions on allowed values for parameters, these items being encapsulated in the PDT.

In a further embodiment, said PDT comprises means for verifying edited values.

In one embodiment, the PDT comprises means for specifying a parameter as optional.

In another embodiment, each PDT has a mark-up language structure with attributes to capture edited values.

### Detailed Description of the Invention

The invention will be more clearly understood from the following description of some embodiments thereof, given by way of example only with reference to the accompanying drawings in which:-
Fig. 1 illustrates the end-to-end process of provisioning devices.
Figs. 2 to 4 are flow diagrams illustrating operation of a mobile device management system of the invention;
Fig. 5 is a diagram showing signal flows for provisioning;
Figs. 6 and 7 are sample GUI screens of the provisioning system.

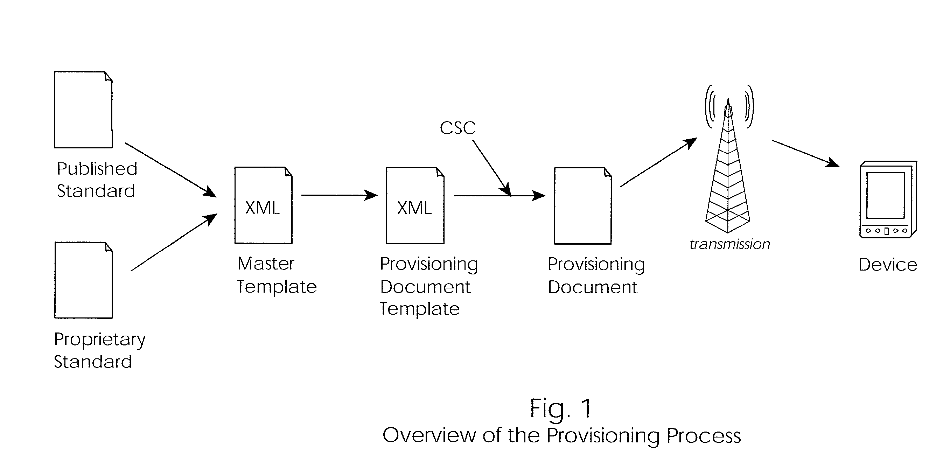

Referring to Fig. 1, a provisioning system of the invention allows an operator to define characteristics of the network. This information is made available to customer care centre operatives. The following are advantageous features.
- The system uses a Master Template document derived for an XML-based provisioning standard based on a DTD and Data Model defined by that standard.
- An XML document, derived from the DTD, forms a provisioning template, listing the parameters of concern to a particular operator.
- The XML template drives a Graphical User Interface (GUI) session between the platform and a Customer Service Centre (CSC). Definitions made by the operator's technical staff are made available to the CSC for transmission to mobile devices.
- Parameters in the template may be assigned unalterable values by the operator, or may be supplied by the CSC in the GUI session.
- XML templates may be formed from either standards-based or manufacturer-based definitions.

The following describes the process in more detail.

### Holding the Operator's Configuration

Initially an XML Document Type Definition (DTD) and a Data Model specification, taken from the standard to be supported, defines the format for all provisioning documents under that standard. The platform holds this definition in a file called a Master Template (MT). A number of Master Templates may be defined, for example, for different standards or to include vendor-specific extensions. Once a MT is defined it is never modified since it represents a specific version of a specific standard, it forms a baseline from which valid provisioning documents may be defined. An MT encapsulates the following information:
- The name and version of the industry standard or proprietary specification that the MT encapsulates.
- The names of all characteristics and parameters allowed under the standard.
- Which parameters are mandatory and which are optional.
- The occurrence rules for parameters, for example, how often a parameter may occur in a document, or the nested nature of some parameters.
- The allowed values for parameter values, for example, has the format of an IP address, or must be true or false.

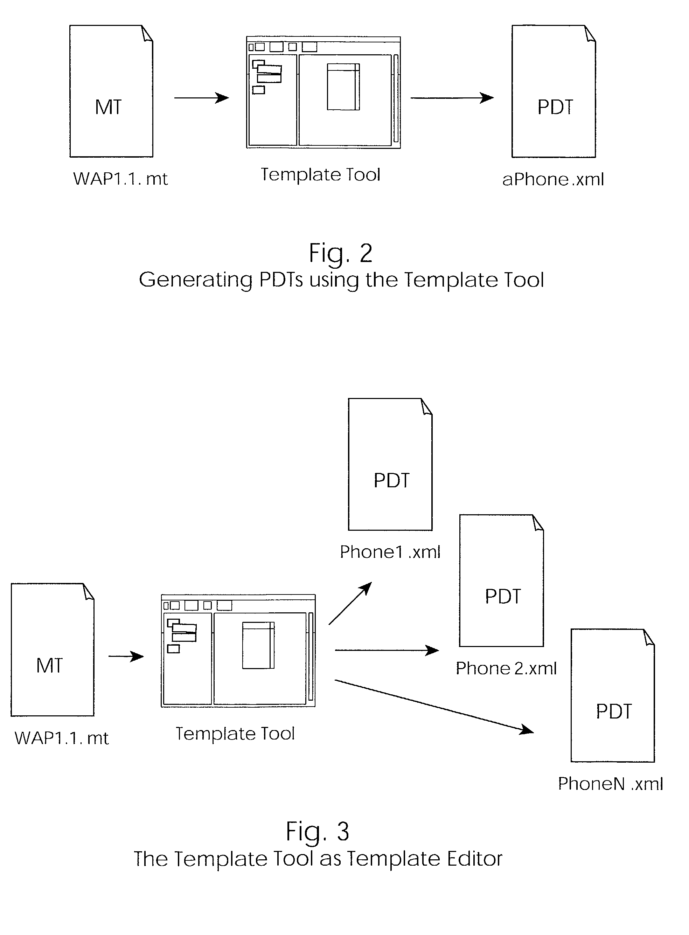

The platform comprises a utility called the Template Tool which interprets Master Template files and enforces rules using a Graphical User Interface (GUI). The tool defines a second type of document called a Provisioning Document Template (PDT), as shown in Fig. 2. It may allow editing to provide multiple PDTs, differing on the basis of the operator's own technical and business criteria.. A PDT contains a specific subset of the Master Template to support, initially a specific device type, but beyond this basic function, a PDT may define a particular service offering, a collection of services representing a service package, provide access to network-specific capabilities, or to provide appropriate support to subscribers of a particular competency level. The PDT allows the operator's technical staff to select the particular parameters necessary to define the network and to ensure that only parameters supported by the device are used (based on information supplied by the device vendor). The tool automatically loads all mandatory parameters as defined by the Master Template and continues to enforce occurrence rules for the standard in question. The PDT may specify final values for all provisioning parameters, or may allow the CSC to choose from a number of pre-selected values, or can allow the CSC include arbitrary values in the provisioning document. The PDT encapsulates the following information:
- Specify fixed value for some parameters (cannot be overridden by the CSC).
- Specify which parameters require review or input from the CSC.
- Provide defaults/limits for those values to be input by the CSC.
- Specify text to prompt the CSC or provide an explanation of what is expected for a particular parameter.
- Specify which parameters are optional, i.e., may be omitted at the CSC's discretion.

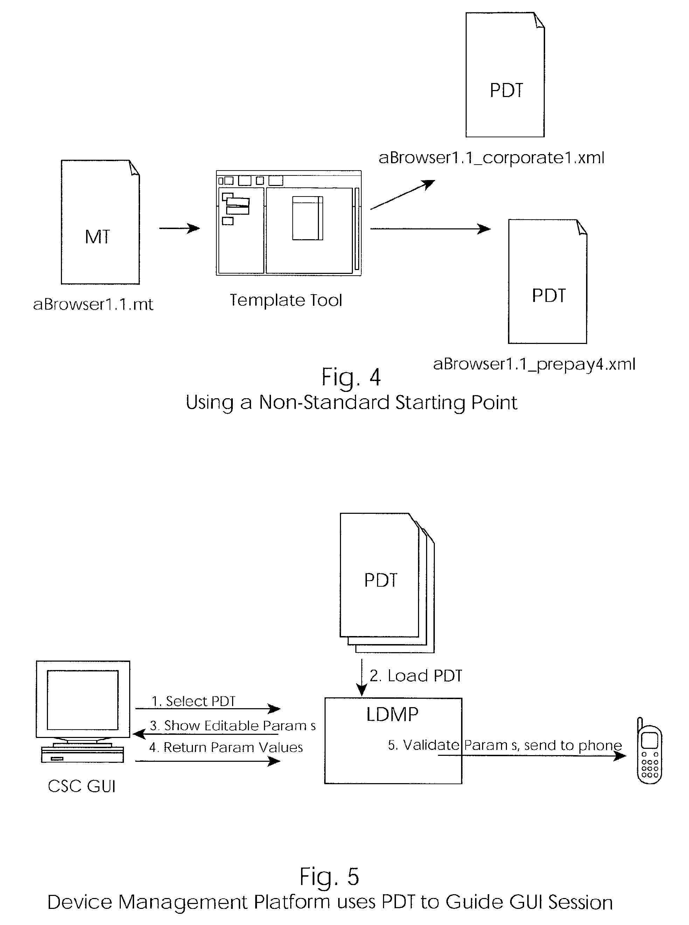

The operator, in line with their business and technical needs, can use the tool to define a set of services offered over a range of supported devices, for example, a single PDT might define service A on device X, the operator's technical staff might also define more PDTs to define the same service on devices Y, Z, etc. Fig. 3 describes the process of defining a PDT, for example to define a service for a number of different device types. Finally the technical staff might create another PDT to define service B on device X, and so on. Fig. 4 shows how a number of services might be defined for a single device type.

Once this set of PDTs has been created, they are made available by the system to the operator's CSC staff. The system ensures that CSC is restricted, firstly to using only PDTs made available by the technical staff, and secondly to define the final provisioning content only in accordance with the rules defined within a PDT. This restriction ensures that not only is valid content generated for final provisioning documents, but that a lower level of technical competency is necessary within the CSC, the more difficult technical and business decisions being encapsulated within the PDTs.

In format, a PDT is an XML document, structured similarly to an XML provisioning document, but having additional attributes to capture the choices above. The following is a (short) example PDT file:

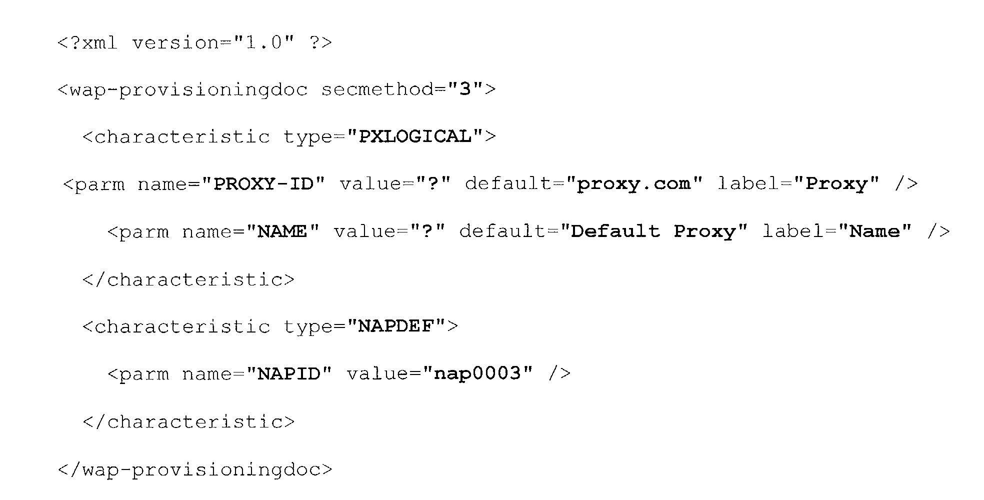

The following table shows the XML attributes attached to parameters along with their meaning:

**Table-1:**

| Attributes of Parameters in a Provisioning Document Template | | |
|---|---|---|
| **Attribute** | **Values** | **Description** |
| name | | Gives the name of the parameter as it is to appear in the provisioning document that's eventually sent to the device. |
| value | | Gives the value of the parameter. If a literal value is given, then this value cannot be overridden by the CSC and should be displayed on the CSC GUI. If the value is "?" then this value may be supplied by the CSC and should be displayed on the CSC GUI for editing. |
| default | | If the value of the value attribute is "?", then this specifies a default value for the parameter. This default may be overridden by the CSC. |
| label | | This provides descriptive or helpful text describing the nature of the parameter. This should be displayed on the CSC GUI beside the default value of the parameter. This attribute is only relevant for attributes whose value may be specified by the CSC. |
| optional | "yes" | If the value of this attribute is "yes" then this parameter is not mandatory and the CSC GUI must allow this. If a value is not entered by the CSC for an optional parameter, then that parameter is not included in the provisioning document sent to the device. This attribute is only relevant for attributes whose value may be specified by the CSC. |
| size | *"size"* | Since the provisioning document is XML and therefore text based, it may be desirable to limit the length of the value entered by the CSC. This attribute should be used by the CSC CUI to limit the size of the data value entered by the CSC. This attribute is only relevant for attributes whose value may be specified by the CSC. |
| options | "*val1* \|*val2* \|..*valn*" | This attribute allows a fixed number of options, defined by the operator, to be presented to the CSC. The CSC GUI must |
| | | ensure that only one of these values is selected. This attribute is only relevant for attributes whose value may be specified by the CSC. |

### Selecting the Correct Configuration for a Device

When an operator selects or allows a new device type in their network, a device for which they intend to provide provisioning support, the operator is supplied with a Master Template describing the XML provisioning parameters understood by the device. This data sheet must originate from the vendor. Alternatively, the vendor may state that the device is compliant with an existing and published industry standard, in which case, the operator is supplied with a Master Template describing that standard.

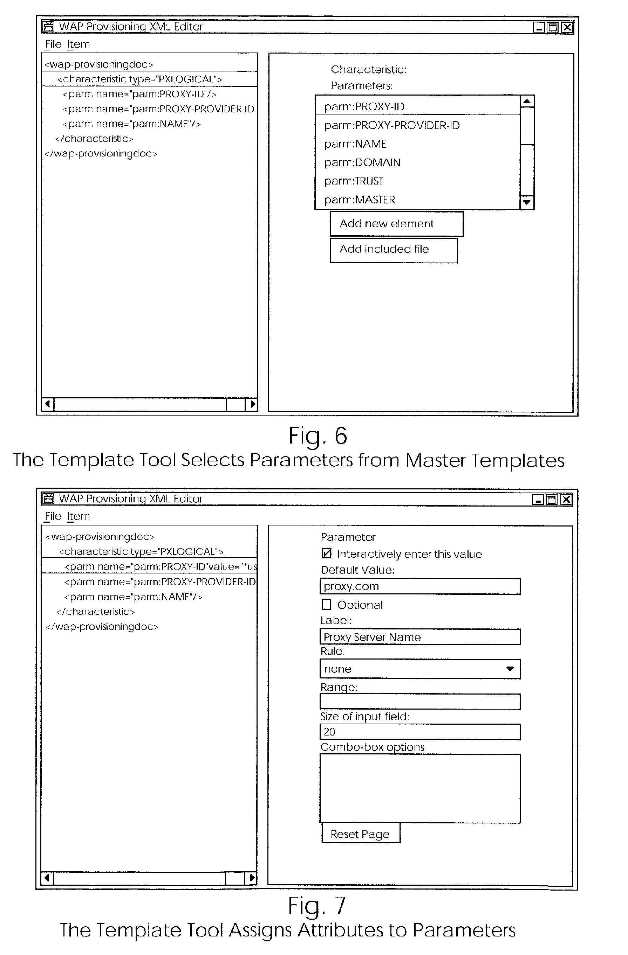

If, for example, the device was WAP compliant, the operator would select the WAP 1.1 Master Template as the starting point, and using the GUI select the parameters that are supported by the device and are required by the operator.
- The tool converts it to one or more PDTs. It does this as follows. The operator, based on information from the device vendor, selects the industry standard or proprietary specification to which the device complies. The operator then selects the Master Template representing this standard.
- Once the MT is selected, the tool automatically loads all parameters considered mandatory under the standard. This information is present in the MT, and all of these parameters will appear in the final PDT. Depending on the standard, parameters may have nested sub-parameters, and some or all of these may also be mandatory and if so they are automatically loaded.
- The operator then selects any optional parameters necessary to define the service, and these will also appear in the final PDT. Note that with optional parameters, once the parameter is selected, the standards may mandate some sub-parameter while leaving others as optional. The tool automatically loads any such mandatory parameters. The process of selecting parameters is illustrated in Fig. 6.
- Once all necessary parameter have been selected, the operator proceeds through each selected parameters and assigns each attributes from Table 1. These attributes ultimately control the use of the PDT by the CSC staff at the provisioning stage, by providing both assistance to the CSC staff but also restricting the staff to the correct use of the provisioning system. The process of assigning attributes is illustrated in Fig. 7.

When finished, the PDT is saved to a file whose name is in line with the operator's naming convention e.g., Nokia7120_NokiaBrowser2.3.xml. This PDT is saved in the system for use later in provisioning activities.

### Driving the CSC GUI

The following is the process for provisioning a mobile device referring to Fig. 5. It assumes that a request has been received (by phone, e-mail, contract, etc.) to provision the device of a specific subscriber.

The CSC determines the type of service to be provisioned.
- The CSC selects a PDT to support that device. This selection may be based on knowledge of the subscriber's device type and the service level to which the subscriber wishes to subscribe.
- The platform server loads the PDT. It extracts the parameters that may be modified by the CSC and presents these on the CSC GUI according to the rules defined in Table-1.
- The CSC may be required to enter some values, and may elect to change others, and returns these values to the platform server.
- The platform server takes the CSC entered values and validates them. It then combines these values with the fixed values contained in the template and creates the final provisioning document ready to be sent to the device. This final document is an XML document, which can be interpreted by the device to effect provisioning. The means of transmitting the XML document to the device is beyond the scope of this specification.

Figs. 6 and 7 are examples of what the SysAdmin tool looks like. The first shows the action of selecting characteristics and parameters, the second shows the action of associating attributes to individual parameters.

It will be appreciated that the invention achieves:
- Support for multiple XML-based device provisioning standards.
- An extensible system, supporting non-standard extensions and providing a level of future-proofing against future standards.
- A means to allow the operator's technical staff encapsulate the requirements and limitations of a particular device into a single document. This document can subsequently be used by a CSC with little or no knowledge of the particulars of the device or the network in which it operates.
- A defined user interface to guide the CSC through the selection of the correct provisioning document and through the selection of parameter values.

The invention is not limited to the embodiments described but may be varied in construction and detail.

## Claims

1. A mobile device provisioning system comprising means for generating a provisioning document and for directing transmission of said document to a mobile device to provision the device, **characterised in that**, the system comprises:-
means for storing a set of provisioning document templates (PDTs), each PDT including a set of provisioning parameter values for provisioning a type of device;
means for selecting a PDT applicable to a device to be provisioned; and
means for converting the selected PDT to a provisioning document.

2. A system as claimed in claim 1, wherein the system further comprises means for storing master template (MT) documents, each MT including a complete set of possible provisioning parameters, the set being defined by an industry provisioning standard or by proprietary specification from a device vendor, and means for selecting a MT applicable to a device type from which a PDT may be generated.

3. A system as claimed in claim 2, wherein the system comprises means for generating the PDTs, said means comprises means for automatically enforcing rules of the industry standard or proprietary specification of the MT.

4. A system as claimed in claim 3, wherein the rules specify which parameters must be present in the final provisioning document and there are occurrence rules for those parameters as defined by the operator, and which define how many times a parameter or sub-parameter can or must occur in a provisioning document.

5. A system as claimed in any preceding claim, wherein a PDT specifies fixed values for some parameters and variable values for other parameters, and comprises means for allowing customer care editing of the variable values.

6. A system as claimed in any preceding claim, wherein the system further comprises means for assisting customer care in constructing the provisioning document by generating visual prompts, default values, and restrictions on allowed values for parameters, these items being encapsulated in the PDT.

7. A system as claimed in any preceding claim, wherein said PDT comprises means for verifying edited values.

8. A system as claimed in any preceding claim, wherein the PDT comprises means for specifying a parameter as optional.

9. A system as claimed in any preceding claim, wherein each PDT has a mark-up language structure with attributes to capture edited values.
